(19) Europäisches Patentamt

European Patent Office

Office européen des brevets

(11) **EP 0 875 664 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*E21F 15/08* (2006.01)     *E21F 15/00* (2006.01)
*C04B 40/00* (2006.01)     *B01F 15/04* (2006.01)
*B28C 7/00* (2006.01)

(21) Anmeldenummer: **98105207.9**

(22) Anmeldetag: **23.03.1998**

(54) **Verfahren zur Herstellung eines hydraulisch förderbaren Feststoff-Flüssigkeits-Gemisches**

Method for making a hydraulical transportable solid/liquid mixture

Procédé de fabrication d'un mélange solide/liquide transportable hydrauliquement

(84) Benannte Vertragsstaaten:
**ES FR GB**

(30) Priorität: **28.04.1997 DE 19717971**

(43) Veröffentlichungstag der Anmeldung:
**04.11.1998 Patentblatt 1998/45**

(73) Patentinhaber:
• **K+S KALI GmbH**
**34131 Kassel (DE)**
• **Jacoby, Gunter, Dipl.-Ing.**
**41749 Viersen-Süchteln (DE)**
• **Kecke, Hans-Joachim, Prof. Dr.-Ing.Dr.h.c.**
**39108 Magedeburg (DE)**

(72) Erfinder:
• **Städtler, Gerrit, Dr.-Ing.**
**36457 Stadtlengsfeld (DE)**
• **Lindloff, Uwe, Dipl.-Ing.**
**36251 Bad Hersfeld (DE)**
• **Jacoby, Günter, Dipl.-Ing.**
**41749 Viersen-Süchteln (DE)**
• **Kecke, Hans-Joachim, Prof. Dr.-Ing. Dr.**
**39108 Magdeburg (DE)**

(56) Entgegenhaltungen:
DE-A- 4 237 543     DE-A- 4 311 658
DE-A- 19 529 850     DE-A- 19 539 684
US-A- 4 654 802

**Beschreibung**

Es ist bekannt, nach dem sogenannten Pumpversatzverfahren, zähflüssigen, betonähnlichen Dickstoff aus Aufbereitungsabgängen als Versatzgut, Zement und Wasser in durch Abbau geschaffene Grubenhohlräume zu fördem. (Lehrbuch der Bergbaukunde, Verlang Glückauf GmbH; Essen; 1989; S. 565-566) Die Technologie der hydraulischen Dickstoffförderung kann auch beim Endlagem von konditioniertem Abfall angewendet werden (Erzmetall 44 (1991) Nr. 3, S. 145 ff). Die Pumpanlage wird dabei in Abhängigkeit von im Labor ermittelten rheologischen Kennwerten (Fließgrenze, Viskosität) vorgegebener Dickstoffmischungen hinsichtlich Druckbedarf, Förderweglänge, Rohrdurchmesser und Fördergeschwindigkeit ausgelegt. Die optimale Mischung wird off-fine durch Technikumsversuche ermittelt, wobei neben den rheologischen Eigenschaften das Abbindeverhalten berücksichtigt wird.

In der DE-OS 43 11 658 wird ein Verfahren zur Herstellung von Streckenbegleitdämmen im untertägigen Bergbau beschrieben, bei dem Flotationsberge der Steinkohlenaufbereitung mit Zement nach untertage gefördert werden, wobei die Flotationsberge schon übertage mit einer solchen Wassermenge angerührt werden, die etwa dem Wasserbedarf des Abbindevorgangs entspricht. Eine Minimierung der notwendigen Wasserzugabe ist nicht vorgesehen.

In "Glückauf" 127 (1991) Nr. 19/20, S. 843-849 werden Grundlagen des Verfüllens untertägiger Hohlräume beschrieben und festgestellt, daß das Problem der hydraulischen Förderung darin besteht, optimale Rezepturen bezüglich der stofflichen und komgrößengerechten Zusammensetzung zu finden, die einen beherrschbaren Druckbedarf verursachen (S. 846, 2. Spalte). Dabei werden optimale Rezepturen nur im Experiment ermittelt.

Die hydraulischen Eigenschaften sowie die Verfestigungsvorgänge von Feststoff-Flüssigkeitsgemischen werden vielfach durch die Komzusammensetzung, die chemische Stoffzusammensetzung sowie die Stoffdichte des Feststoffs und das Mischverhältnis zwischen Feststoff und Flüssigkeit bestimmt. Bei wechselnden Eigenschaften der einzelnen Komponenten des Gemisches muß das Mischungsverhältnis fortlaufend angepaßt werden. Durch eine dem Prozeß vorgeschaltete Analytik werden die entsprechenden Parameter eingestellt. Bekannt ist auch, derartige Prozesse nach Leitparametem, wie die Gemischdichte, zu regeln.

Es ist die Aufgabe zu lösen, das gattungsgemäße Pumpversatzverfahren für die hydraulische Dickstoffförderung so weiterzubilden, daß für Stoffe mit wechselnden Eigenschaften bei einem Minimum an Flüssigkeit die Verpumpbarkeit der Mischung bis vor Ort gewährleistet wird und dort ein vollständiges Abbinden ohne Flüssigkeitsablauf erfolgt. Die Aufgabe wird erfindungsgemäß durch die Merkmale gemäß Hauptanspruch 1 gelöst.

Es wurde gefunden, daß sich der Zusammenhang zwischen rheologischen Eigenschaften und Mischungsverhältnissen durch mathematische Zusammenhänge darstellen läßt. Die für die Optimierung der Mischungsverhältnisse erforderlichen Parameter lassen sich aus den hydraulischen Eigenschaften der Gemische während der Verfahrens selbst ermitteln. Das Verfahren geht zunächst von zwei Voreinstellungen aus, die einmal das empirisch ermittelte Verhältnis der Bindemittelmenge $\dot{m}_B$ in Abhängigkeit von der gravimetrischen Reststoffmenge $\dot{m}_R$ beinhalten und zum anderen die zugehörige Flüssigkeitsmenge $\dot{V}_F$, die im Unterschuß dosiert wird. Die einzelnen Mengenströme ergeben sich wie folgt: $\dot{m}_B = \dot{m}_R \cdot b$; $\dot{V}_F = (\dot{m}_R + \dot{m}_B)f$, wobei die Faktoren b und f empirisch ermittelt werden. Die Mischbarkeit muß gegeben sein.

Erfindungsgemäß wird nach der Voreinstellung und Dosierung der ersten unterschüssigen Flüssigkeitsmenge im Mischer eine zweite Flüssigkeitsmenge $\Delta\dot{V}_F$ zudosiert, da die im Mischer befindliche Mischung noch nicht anlagenbezogen, optimal pumpbar ist. Die zusätzlich zuzuführende Flüssigkeitsmenge wird über einen empirisch gefundenen Zusammenhang zwischen dem Flüssigkeitsanteil und den rheologischen Eigenschaften der zu verpumpenden Mischung im Mischer ermittelt und zudosiert. In einer Ausführung der Erfindung wird der Druckverlustgradient $\frac{\Delta p}{L}$ aus Viskositätsmessungen des Dickstoffs nach bekannten Stoffgesetzen (wie z.B. nach Newton, Bingham, Ostwald) ermittelt und die Regelung nach dem für das System möglichen maximalen Druckverlustgradienten (Pumpbarkeitsgrenze) vorgenommen. In einer zweiten Ausführung wird der Druckverlustgradient direkt bzw. in eingeordneten Prüfeinrichtungen gemessen. Eine dritte Ausführung sieht die Ermittlung des $\tau$-Wertes (Zähigkeit) und Regelung nach dem für das System gültigen $\tau$-Wert vor. In jedem Fall wird die Feststoffvolumenkonzentration $c_t$ im Mischgut ermittelt und die Abweichung $\Delta c_t$ vom $c_t$-Wert, der dem maximalen Druckverlustgradienten zugeordnet ist, bestimmt. Daraus ergibt sich die neue Konstante f für die Flüssigkeitsvoreinstellung und die Regelung nach $\Delta\dot{V}_F = \Delta f \cdot (\dot{m}_R + \dot{m}_B)$.

Die nunmehr pumpbare Mischung am Mischerausgang wird in einen Reaktor gegeben, in dem nur noch eine Nachdosierung mit geringen Mengen stattfindet. Grundlage der Nachdosierung (dritte Flüssigkeitszugabe) ist eine Druckverlustmessung unmittelbar nach der Pumpe in der Dickstoffleitung. Der Meßwert des Druckverlustes wird mit dem Zielwert verglichen und gegebenenfalls eine auf den Reaktorinhalt abgestimmte feste Flüssigkeitsmenge zudosiert. Die Taktzeit ergibt sich aus dem Mischverhalten des Reaktors und ist durch einen Versuch zu optimieren.

Durch die erfindungsgemäße Flüssigkeitszugabe, die stufenweise in einer ersten Hauptmenge im Unterschuß in den Mischer und in zwei folgenden Zusatzwassermengen in den Mischer bzw. in den Reaktor in Abhängigkeit von den online gemessenen, die Fließeigenschaften der Dickstoffmischung charakterisierenden Kenngrößen, zudosiert werden, wird bei einem Minimum an Flüssigkeitszugabe eine weitgehende Verbesserung der Pumpbarkeit bis vor Ort gewährleistet. Eine Flüssigkeitsabgabe am Ort des Versatzes entfällt.

Die erfindungsgemäße Lösung wird im nachfolgenden Ausführungsbeispiel näher erläutert:

In einen untertägigen Hohlraum einer Salzgrube wird ein Dickstoff verpumpt, der aus einer Menge Filterstaub aus einer Müllverbrennungsanlage, MgO als Bindemittel und $MgCl_2$-gesättigter Lösung als Anmaischflüssigkeit besteht. Es werden z.B. 20 t Reststoff pro Stunde verpumpt. Bei einem Vorgabewert von b = 0,2, der empirisch ermittelt wurde, ergibt sich eine Bindemittelmenge von 4 t/h. Aus der Summe der Feststoffdurchsätze und einem ebenfalls empirisch gefundenen Faktor f = 0,5 $m^3$ Flüssigkeit/t Feststoff wird eine erste unterschüssige Flüssigkeitsmenge von 12 $m^3$/h errechnet. Diese Komponentenmengen werden in einen Mischer dosiert zugegeben, so daß eine zwar mischbare aber nicht pumpbare Suspension entsteht. Die entstandene Suspension wird nun hinsichtlich der Reststoffdichte, der Feststoffvolumenkonzentration und der rheologischen Eigenschaften bewertet Da die Reststoffdichte je nach Reststoff unterschiedlich ist, wird sie aus der gemessenen Gemischdichte errechnet. Im vorliegenden Beispiel ergibt sich bei einer Bindemitteldichte von 3,2 $t/m^3$ und einer gemessenen Gemischdichte von 1,7 $t/m^3$ eine Reststoffdichte von 2,395 $t/m^3$, woraus eine Feststoffvolumenkonzentration $c_t$ von 0,44 $m^3$ Feststoff/$m^3$ Suspension resultiert.

Diese Feststoffvolumenkonzentration $c_t$ bildet nunmehr die Basis für die Ermittlung der Soll-Feststoffvolumenkonzentration bei der die Verpumpbarkeit gerade gegeben ist. Die Soll-Feststoffvolumenkonzentration ist ihrerseits abhängig vom maximalen Druckverlustgradienten im Verhältnis zum momentan vorhandenen Druckverlustgradienten. Der maximale Durckverlustgradient ist ein vorgegebener Wert für eine definierte Rohrleitung und einen definierten Dickstoffvolumenstrom.

Die Erfindung sieht nun zwei Ausführungen der Druckverlustermittlung vor, zum einen die rechnerische Ermittlung aus online-Viskositätsmessungen und zum anderen die direkte Druckverlustmessung. Nach der ersten Ausführung wird das Fließverhalten nach den bekannten Fließgesetzen wie z.B. nach OSTWALD bzw. BINGHAM identifiziert und zu diesem Zweck die Ist-Scherspannung der Suspension im Mischer bei verschiedenen Schergefällen gemessen. Im Beispiel werden folgende Scherspannungen gemessen:

$$\tau_{100} = 576 \text{ Pa}$$

$$\tau_{200} = 800 \text{ Pa}$$

$$\tau_{250} = 920 \text{ Pa}$$

Es wird stets das Fließgesetz identifiziert, für das die absolute Differenz zwischen errechneter Scherspannung, und gemessener Scherspannung am kleinsten ist.

Im Beispiel wird nach OSTWALD ein $\tau_{250}$ -Wert von 889,24 Pa und nach

BINGHAM ein $\tau_{250}$ -Wert von 912 Pa

ermittelt. Die Differenz zwischen 912 Pa nach BINGHAM und dem gemessenen $\tau_{250}$ von 920 Pa ist die kleinere, also gilt das Fließgesetz BINGHAM. Der dazugehörige Druckverlustgradient für einen definierten Rohrleitungsdurchmesser und eine bestimmte Strömungsgeschwindigkeit, ermittelt aus der ersten im Mischer zugegebenen Flüssigkeitsmenge und dem Feststoffvolumenstrom beträgt für das erfindungsgemäße Beispiel 24,22 kPa/m. Die Identifikation kann ebenso mit einem $\tau$-Wert bei einem anderen Schergefälle durchgeführt werden. Die direkte Druckverlustmessung nach der zweiten Ausführung ergibt ebenfalls einen Wert von 24 kPa/m.

Bei einem vorgegebenen Wert für den maximalen Druckverlustgradienten von 12 kPa/m, bei dem die Pumpbarkeitsgrenze erreicht ist, beträgt das Verhältnis zum momentan, nach der ersten Flüssigkeitszugabe erreichten Druckverlustgradienten (ermittelt nach BINGHAM oder direkt gemessen) 1 : 2.

Die Soll-Feststoffvolumenkonzentration wird aus der nachfolgenden Beziehung errechnet.

$$c_t = \left[ \frac{\frac{\Delta P}{L} \text{ max}}{\frac{\Delta P}{L} \text{ ist}} \right]^{\frac{1}{\kappa}} \cdot c_t \text{ (Voreinstellung)}$$

Bei einem empirischen Vorgabewert K = 3 und der eingangs bestimmten Feststoffvolumenkonzentration von 0,44 m$^3$ Feststoff/m$^3$ Suspension beträgt die Soll-Feststoffvolumenkonzentration 0,357 m$^3$/m$^3$.

Nach einer weiteren Variante kann der Soll-Feststoffvolumenanteil auch mit Hilfe der berechneten oder gemessenen Viskosität ermittelt werden. Statt des Druckverlustgradienten-Verhältnisses wird das Viskositätsverhältnis $\tau_{max}/\tau_{ist}$ berechnet und nach der analogen Beziehung die Soll-Feststoffvolumenkonzentration bestimmt. Bei einem $\tau_{max, 100}$ von 307 Pa, einem empirischen Vorgabewert K von 3 und der eingangs bestimmten Feststoffvolumenkonzentration von 0,44 m$^3$/m$^3$ resultiert der gleiche Soll $c_t$-Wert von 0,357 m$^3$/m$^3$.

Statt der Exponentialfunktion kann auch ein anderer, den Zusammenhang widerspiegelnder Funktionstyp gewählt werden.

Daraus ergibt sich eine zusätzliche Flüssigkeitsmenge von 5 m$^3$/h, die als zweite Flüssigkeitsmenge in den Mischer zur Herstellung einer verpumpbaren Mischung am Mischerausgang zudosiert werden muß. Die verpumpbare Mischung mit 20 t/h Reststoff, 4 t/h Bindemittel und 17 m$^3$/h Flüssigkeit wird in den Reaktor gegeben und von dort aus über Rohrleitungen in die dafür vorgesehenen Hohlräume verpumpt.

Sollte in situ der maximale Druckverlustgradient, gemessen unmittelbar nach der Pumpe in der Dickstoffleitung, um einen bestimmten Betrag überschritten werden, dann erfolgt die Nachdosierung einer dritten Flüssigkeitsmenge in den Reaktor. Dabei erfolgt die erforderliche Nachdosiermenge in Abhängigkeit von der jeweiligen Voreinstellung und dem Reaktorfüllstand nach folgender Beziehung

$$\Delta \dot{V}_F = \left[ \frac{c_{t\,(Voreinstellung)}}{c_{t\,(Voreinstellung)} - 0,02} - 1 \right] \; d^2_R \; \frac{\pi}{4} \; h$$

$d_R$ = Reaktordurchmesser
h = Füllstand
Im Beispiel wird eine Menge von 1,19 m$^3$ errechnet und zudosiert.

## Patentansprüche

**1.** Verfahren zur Herstellung eines hydraulisch förderbaren Feststoff-Flüssigkeits-Gemisches mit dynamischer Anpassung des Gemisches gemäß den Forderungen der optimalen Pumpbarkeit und der restflüssigkeitsfreien Abbindung, wobei der Feststoff aus einem zu verbringenden Abfall-/Reststoff und einem Bindemittel besteht zur Endlagerung in untertägigen Hohlräumen unter Anwendung folgender Verfahrensschritte:

- Mischen der Gemischkomponenten in einem Mischer, nach vorgegebenen Voreinstellungen, wobei die Abfall-/Reststoffmenge gravimetrisch bestimmt und die dazugehörige Bindemittelmenge nach empirisch ermitteltem Verhältnis beider Komponenten zudosiert und eine erste Flüssigkeitsmenge im Unterschuß ebenfalls nach vorgegebenem empirisch ermittelten Verhältnis Feststoff/Flüssigkeit zugegeben wird.
- Zugabe einer zweiten Flüssigkeitsmenge in den Mischer zur Herstellung einer verpumpbaren Mischung am Mischerausgang, wobei die rheologischen Mischungseigenschaften, die die Verpumpbarkeit charakterisieren, im Mischer gemessen werden und in Abhängigkeit von diesen Eigenschaften nach vorher empirisch ermitteltem Zusammenhang die zweite Flüssigkeitsmenge zudosiert wird.
- Übergabe der verpumpbaren Mischung aus dem Mischer in einen nachfolgenden Reaktor, in den eine dritte Flüssigkeitsmenge in Abhängigkeit vom Reaktorinhalt und vom Druckverlust in der Dickstoffleitung zudosiert wird.

**2.** Verfahren nach Anspruch 1, **dadurch gekennzeichnet, daß** die zweite zu dosierende Flüssigkeitsmenge durch das Verhältnis des maximalen Druckverlustgradienten $\frac{\Delta p}{L} max$ , bei dem die Verpumpbarkeit des zu fördemden Festtoff-Flüssigkeits-Gemisches gerade noch gegeben ist, zum Ist-Druckverlustgradienten $\frac{\Delta p}{L} ist$ , bezogen auf die momentan im Mischer vorhandene Suspension, sowie die Feststoffvolumenkonzentration $c_t$ (Voreinstellung) bestimmt wird, wobei der zutreffende Funktionstyp unterschiedlich sein kann.

**3.** Verfahren nach Anspruch 1, **dadurch gekennzeichnet, daß** die zweite zu dosierende Flüssigkeitsmenge durch das Verhältnis der maximalen Zähigkeit $\tau max$, bei der die Verpumpbarkeit des zu fördemden Feststoff-Flüssigkeits-Gemisches gerade noch gegeben ist zur Ist-Zähigkeit $\tau$ *ist*, bezogen auf die momentan im Mischer vorhandene Suspension, sowie die Feststoffvolumenkonzentration $c_t$ (Voreinstellung) bestimmt wird, wobei der zutreffende Funktionstyp unterschiedlich sein kann.

**4.** Verfahren nach Anspruch 2 oder 3, **dadurch gekennzeichnet, daß** der Funktionstyp vorzugsweise eine Exponentialfunktion ist.

**5.** Verfahren nach Anspruch 2, **dadurch gekennzeichnet, daß** der Ist-Druckverlustgradient direkt aus Druckverlustmessungen bestimmt wird.

**6.** Verfahren nach Anspruch 2, **dadurch gekennzeichnet, daß** der Ist-Druckverlustgradient indirekt über die Identifikation des zutreffenden Fließgesetzes nach OSTWALD, BINGHAM oder NEWTON bestimmt wird.

**7.** Verfahren nach Anspruch 6, **dadurch gekennzeichnet, daß** dasjenige Fließgesetz identifiziert wird, bei dem der Absolutwert der Differenz zwischen gemessener Scherspannung der Suspension im Mischer bei einem bestimmten Schergefälle und nach dem entsprechenden Fließgesetz errechneter Scherspannung am kleinsten ist.

**8.** Verfahren nach Anspruch 1, **dadurch gekennzeichnet, daß** eine dritte Flüssigkeitsmenge dann in den Reaktor zudosiert wird, wenn der maximal zulässige Druckverlust in der nachfolgenden Dickstoffleitung überschritten wird.

**9.** Verfahren nach Anspruch 1 bis 7, **dadurch gekennzeichnet, daß** zur Charakterisierung der Mischung im Mischer zusätzlich eine Dichtebestimmung des Materials erfolgt.

**Claims**

**1.** A process for producing a hydraulically conveyable solid-liquid mixture with dynamic adaptation of the mixture according to the requirements of optimum pumpability and residual liquid-free setting, wherein the solid comprises a waste/residual substance to be supplied and a binding agent for permanent disposal in underground cavities using the following process steps:

- mixing the mixture components in a mixer in accordance with predetermined presettings, wherein the amount of waste/residual substance is gravimetrically determined and the associated amount of binding agent is added in accordance with the empirically ascertained ratio of the two components and a first amount of liquid is added in a deficiency quantity also in accordance with a predetermined empirically ascertained solid/liquid ratio,
- adding a second amount of liquid to the mixer for producing a pumpable mixture at the mixer discharge, wherein the rheological mixture properties which characterise pumpability are measured in the mixer and the second amount of liquid is added in dependence on said properties in accordance with a previously empirically ascertained relationship, and
- transfer of the pumpable mixture from the mixer into a subsequent reactor to which a third amount of liquid is added in dependence on the reactor content and the pressure drop in the thick substance conduit.

**2.** A process according to claim 1 **characterised in that** the second amount of liquid to be added is determined by the ratio of the maximum pressure drop gradient $\frac{\Delta p}{L} \boldsymbol{max}$ at which pumpability of the solid-liquid mixture to be conveyed is just still given, to the actual pressure loss gradient $\frac{\Delta p}{L} \boldsymbol{actual,}$ related to the suspension present at the time in the mixer, as well as the solid volume concentration $c_t$ (presetting), wherein the applicable type of function can be different.

**3.** A process according to claim 1 **characterised in that** the second amount of liquid to be added is determined by the ratio of maximum viscosity $\tau max$ at which pumpability of the solid-liquid mixture to be conveyed is just still given, to the actual viscosity $\tau actual$, related to the suspension present at the time in the mixer, as well as the solid volume concentration $c_t$ (presetting), wherein the applicable type of function can be different.

**4.** A process according to claim 2 or claim 3 **characterised in that** the type of function is preferably an exponential function.

5. A process according to claim 2 **characterised in that** the actual pressure drop gradient is determined directly from pressure drop measurements.

6. A process according to claim 2 **characterised in that** the actual pressure drop gradient is determined indirectly by way of the identification of the applicable flow law in accordance with OSTWALD, BINGHAM or NEWTON.

7. A process according to claim 6 **characterised in that that** flow law is identified at which the absolute value of the difference between the measured shear stress of the suspension in the mixer at a given shear gradient and the shear stress calculated in accordance with the corresponding flow law is at its smallest.

8. A process according to claim 1 **characterised in that** a third amount of liquid is added to the reactor when the maximum permissible pressure drop in the subsequent thick substance conduit is exceeded.

9. A process according to claims 1 to 7 **characterised in that** a material density determining operation is additionally effected to characterise the mixture in the mixer.

**Revendications**

1. Procédé de production d'un mélange solide-liquide pouvant être transporté hydrauliquement avec adaptation dynamique du mélange suivant les exigences de l'aptitude à être pompée la meilleure possible et de la prise sans liquide résiduel, la matière solide étant constituée d'une matière résiduelle/déchets perdus et d'un liant pour le stockage définitif dans des cavités souterraines en utilisant des stades suivants de procédé :

   - on mélange les constituants du mélange dans un mélangeur suivant des prescriptions données à l'avance, la quantité de déchets/matière résiduelle étant déterminée gravimétriquement et la quantité de liant associée étant ajoutée de manière dosée suivant un rapport déterminée empiriquement des deux constituants et une première quantité de liquide étant ajoutée en défaut également suivant un rapport matière solide/liquide donné à l'avance et déterminé empiriquement ;
   - on ajoute une deuxième quantité de liquide dans le mélangeur pour produire un mélange pouvant être pompé à la sortie du mélangeur, les propriétés rhéologiques du mélange qui caractérisent l'aptitude à être pompé étant mesurées dans le mélangeur et la deuxième quantité de liquide étant ajoutée de manière dosée en fonction de ces propriétés suivant un rapport déterminé empiriquement auparavant ;
   - on transvase le mélange qui peut être pompé du mélangeur dans un réacteur venant ensuite dans lequel on ajoute de manière dosée une troisième quantité de liquide en fonction du contenu du réacteur et de la perte de charge dans le conduit pour la matière épaisse.

2. Procédé suivant la revendication 1, **caractérisé en ce que** l'on détermine la deuxième quantité de liquide à ajouter de manière dosée par le rapport entre le gradient $(\Delta p/L)_{max}$ maximum de perte de charge pour lequel l'aptitude au pompage du mélange solide-liquide à transporter est encore juste obtenu et le gradient $(\Delta p/L)_{ist}$ de perte de charge réelle rapporté à la suspension présente dans l'instant dans le mélangeur, ainsi que la concentration $c_t$ en volume de la matière solide (prescription), le type de fonction exact pouvant être différent.

3. Procédé suivant la revendication 1, **caractérisé en ce que** l'on détermine la deuxième quantité de liquide ajoutée de manière dosée par le rapport entre la viscosité $\tau max$ maximum pour laquelle l'aptitude au pompage du mélange solide-liquide à transporter est encore juste obtenue et la viscosité $\tau réel$ rapportée à la suspension présente dans l'instant dans le mélangeur, ainsi que la concentration $c_t$ en volume de matière solide (prescription), le type de fonction exact pouvant être différent.

4. Procédé suivant la revendication 2 ou 3, **caractérisé en ce que** le type de fonction est de préférence une fonction exponentielle.

5. Procédé suivant la revendication 2, **caractérisé en ce que** l'on détermine le gradient de perte de charge réelle directement à partir des mesures de perte de charge.

6. Procédé suivant la revendication 2, **caractérisé en ce que** l'on détermine le gradient de perte de charge réelle indirectement par l'identification de la loi d'écoulement pertinente suivant Oswald, Bingham ou Newton.

7. Procédé suivant la revendication 6, **caractérisé en ce que** l'on identifie la loi d'écoulement pour laquelle la valeur obtenue de la différence entre la contrainte de cisaillement mesurée de la suspension dans le mélangeur pour un gradient de cisaillement déterminé et la contrainte de cisaillement calculée suivant la loi d'écoulement correspondante est la plus petite.

8. Procédé suivant la revendication 1, **caractérisé en ce que** l'on ajoute de manière dosée une troisième quantité de liquide dans le réacteur lorsque la perte de charge maximum admissible dans le conduit pour de la matière épaisse venant ensuite est dépassée.

9. Procédé suivant la revendication 1 à 7, **caractérisé en ce que**, pour caractériser le mélange dans le mélangeur, on effectue en plus une détermination de la masse volumique de la matière.